(19) Europäisches Patentamt
European Patent Office
Office européen des brevets

(11) **EP 2 254 254 B1**

(12) **EUROPEAN PATENT SPECIFICATION**

(45) Date of publication and mention
of the grant of the patent:
**09.04.2014 Bulletin 2014/15**

(51) Int Cl.:
**H04W 52/02** *(2009.01)*

(21) Application number: **09160632.7**

(22) Date of filing: **19.05.2009**

(54) **Method and control unit for controlling a radio receiver circuit**

Verfahren und Steuereinheit zur Steuerung einer Funkempfängerschaltung

Procédé et unité de contrôle pour la commande d'un circuit récepteur radio

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**24.11.2010 Bulletin 2010/47**

(73) Proprietor: **Telefonaktiebolaget LM Ericsson
(publ)
164 83 Stockholm (SE)**

(72) Inventors:
• **Golshenas, Ario
SE-217 64, Malmö (SE)**
• **Hultgren, Simon
SE-214 32, Malmö (SE)**

(74) Representative: **Åkerman, Mårten Lennart et al
Ericsson AB
Patent Unit Lund
221 83 Lund (SE)**

(56) References cited:
**EP-A- 1 248 403          EP-A- 1 478 114
EP-A- 1 973 356          WO-A-03/034600
WO-A-2007/025970   US-A1- 2008 004 008**

## Description

## Technical Field

The present invention relates to a method and a control unit for controlling a radio receiver circuit.

## Background

Various services are emerging for wireless mobile communication technologies. One example is multimedia broadcast multicast service (MBMS), which is a technology for broadcast of content over cellular networks to small terminals, or handsets, e.g. for mobile television (TV). MBMS services can e.g. be broadcasted over a secondary common control physical channel (SCCPCH) in a wideband code-division multiple access (WCDMA) communication system, wherein signals carrying the MBMS data may be broadcasted from one or more radio base stations to one or more mobile terminals, such as mobile telephones.

In order to obtain a relatively long time during which such a mobile terminal can be used before recharging of the battery is required, it is normally desirable to have a relatively low power consumption of the mobile terminal. Hence, there is a need for means to receive signals, such as the above-described MBMS signals, with relatively low power consumption. WO 03/034600 discloses a method of achieving power savings in a receiver of a user equipment by turning off the receiver during a portion of a transmission-time interval (TTI).

## Summary

An object of the present invention is to provide for reception of data in a radio receiver circuit with relatively low power consumption.

According to a first aspect of the present invention, there is provided a method for controlling a radio receiver circuit. The radio receiver circuit is adapted to receive data over a communication channel. Data is transmitted over the communication channel in transmission time intervals, each of which comprises at least one time slot. Data transmitted in one or more such time slots of such a transmission time interval comprises a control sequence selected from a finite predefined set of control sequences. The method comprises determining correlation values between a received control sequence of said one or more time slots of a transmission time interval and each of the control sequences of the predefined set. Furthermore, the method comprises determining, based on said correlation values, whether any data is transmitted in the transmission time interval. Moreover, the method comprises, in response to determining that no data is transmitted in the transmission time interval, disabling at least part of the radio receiver circuit during at least part of the remainder of the transmission time interval for saving power.

Determining whether any data is transmitted in the transmission time interval may comprise comparing the highest one of said correlation values with a threshold value, and, if the highest one of said correlation values falls below the threshold value, determining that no data was transmitted in the transmission time interval.

Alternatively, determining whether any data is transmitted in the transmission time interval may comprise comparing a difference between the highest one and the second highest one of said correlation values with a threshold value, and, if said difference falls below the threshold value, determining that no data was transmitted in the transmission time interval.

The method further comprises predicting, based on correlation values of a plurality of time slots, a subsequent transmission time interval for which transmission of data is expected to be resumed. Furthermore, the method comprises enabling said part of the radio receiver circuit before said subsequent transmission time interval. Predicting said subsequent transmission time interval may comprise estimating, based on said correlation values of said plurality of time slots, an average bit rate of the data transmitted over the communication channel and predicting said subsequent transmission time interval based on said average bit rate and a maximum bit rate of the communication channel.

Alternatively, the method may comprise enabling said part of the radio receiver circuit before the following transmission time interval.

The data transmitted over the communication channel may be multimedia broadcast multicast service (MBMS) data. The communication channel may be a communication channel of a wideband code-division multiple-access (WCDMA) communication system. For example, the communication channel may be a secondary common control physical channel (SCCPCH). The control sequence may be a transport format combination indicator (TFCI).

According to a second aspect, there is provided a computer program product comprising computer program code means for executing the method according to the first aspect when said computer program code means are run by a programmable hardware unit.

According to a third aspect, there is provided a control unit for a radio receiver circuit. The radio receiver circuit is adapted to receive data over a communication channel. Data is transmitted over the communication channel in transmission time intervals, each of which comprises at least one time slot. Data transmitted in one or more such time slots of such a transmission time interval comprises a control sequence selected from a finite predefined set of control sequences. The control unit is adapted to perform the method according to the first aspect.

According to a fourth aspect, there is provided a radio receiver circuit adapted to receive data over a communication channel. Data is transmitted over the communication channel in transmission time intervals, each of which comprises at least one time slot. Data transmitted in one or more such time slots of such a transmission time interval comprises a control sequence selected from a finite predefined set of control sequences. The radio receiver circuit comprises a control unit according to the fourth aspect.

According to a fifth aspect, there is provided an electronic apparatus that comprises the radio receiver circuit according to the fourth aspect.

It should be emphasized that the term "comprises/comprising" when used in this specification is taken to specify the presence of stated features, integers, steps, or components, but does not preclude the presence or addition of one or more other features, integers, steps, components, or groups thereof.

**Brief Description of the Drawings**

Further objects, features and advantages of embodiments of the invention will appear from the following detailed description, reference being made to the accompanying drawings, in which:

Fig. 1 schematically illustrates a base station broadcasting data to a plurality of mobile terminals;
Fig. 2 is a block diagram of a mobile terminal according to an embodiment of the present invention;
Fig. 3 is a block diagram of a radio receiver circuit according to an embodiment of the present invention;
Fig. 4 schematically illustrates transmission timing for a secondary common control physical channel (SCCPCH) in a wideband code-division multiple access (WCDMA) communication system;
Figs. 5-7 are flowcharts for methods according to embodiments of the present invention; and
Fig. 8 schematically illustrates a computer readable medium and a programmable hardware unit.

**Detailed Description**

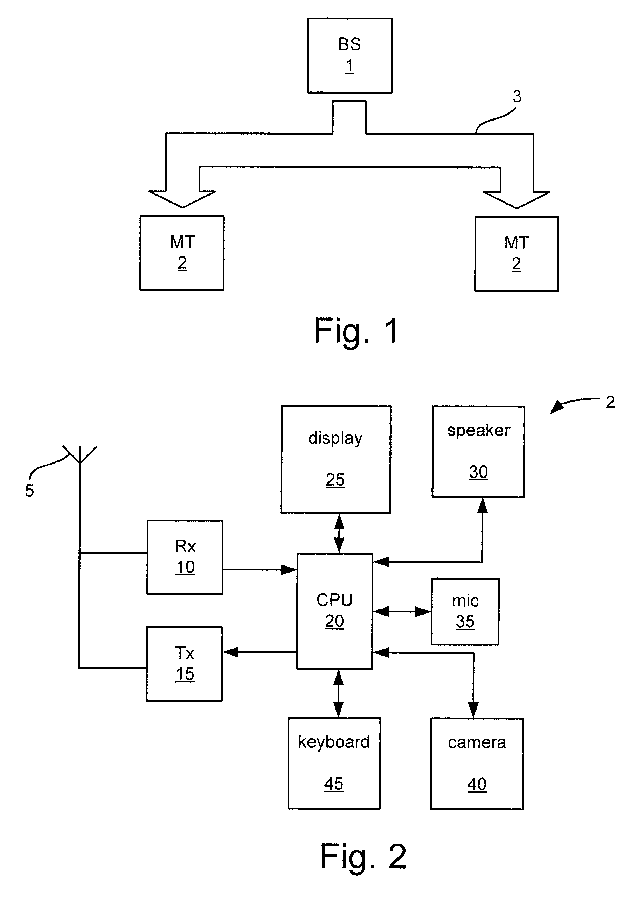

Fig. 1 illustrates an environment wherein embodiments of the present invention may be utilized. A base station (BS) 1 is broadcasting data to a plurality of mobile terminals (MTs) 2 over a wireless communication channel 3. According to embodiments of the present invention, the data is transmitted over the communication channel 3 in transmission time intervals, each of which comprises at least one time slot. Data transmitted in one or more such time slots of such a transmission time interval comprises a control sequence selected from a finite predefined set of control sequences. For example, each time slot may have a dedicated portion, in which the control sequence, or a part thereof, is transmitted. The control sequence may, in some embodiments, be fitted into the dedicated portion of a single time slot. In other embodiments, the control sequence may be divided into several shorter control sequences and distributed over several time slots of a transmission time interval, such that each of the shorter control sequences is fitted into the dedicated portion of a single time slot. An example, which is used for illustration of embodiments of the present invention, is broadcasting of multimedia broadcast multicast service (MBMS) data in a wideband code-division multiple access (WCDMA) communication system, wherein the communication channel 3 is a secondary common control physical channel (SCCPCH), and wherein said control sequence is a transport format combination indicator (TFCI). However, the invention is not limited thereto, but is applicable also to other services and communication channels where similar types of control signaling are used.

Fig. 2 is a block diagram of an MT 2 according to an embodiment of the present invention. According to the embodiment, the MT 2 has an antenna 5 for transmitting and receiving radio signals. The antenna 5 is only an example. In other embodiments, the MT 2 may have a plurality of antennas. Furthermore, the MT 2 comprises a radio receiver circuit 10 for receiving data and a radio transmitter circuit 15 for transmitting data. Moreover, the MT 2 comprises a central processing unit (CPU) 20 for overall control of the MT 2. The CPU 2 is operatively connected to the radio receiver circuit 10 and the radio transmitter circuit 20. Furthermore, the MT 2 comprises a number of output units, such as a display 25 and a speaker 30, and a number of input units, such as a microphone 35, a camera 40, and a keyboard 45, for interaction with a user. It should be emphasized that the block diagram in Fig. 2 is only an example. For example, some units in Fig. 2 may be omitted in some embodiments and/or additional units may be included. Furthermore, although the units in Fig. 2 have been illustrated as separate units, some units, or parts thereof may be implemented as combined units. For example, the keyboard 45 may be implemented in combination with the display 25 as a touch screen. Furthermore, parts of the radio receiver circuit 10 and/or the radio transmitter circuit 20 may be implemented in the CPU 20.

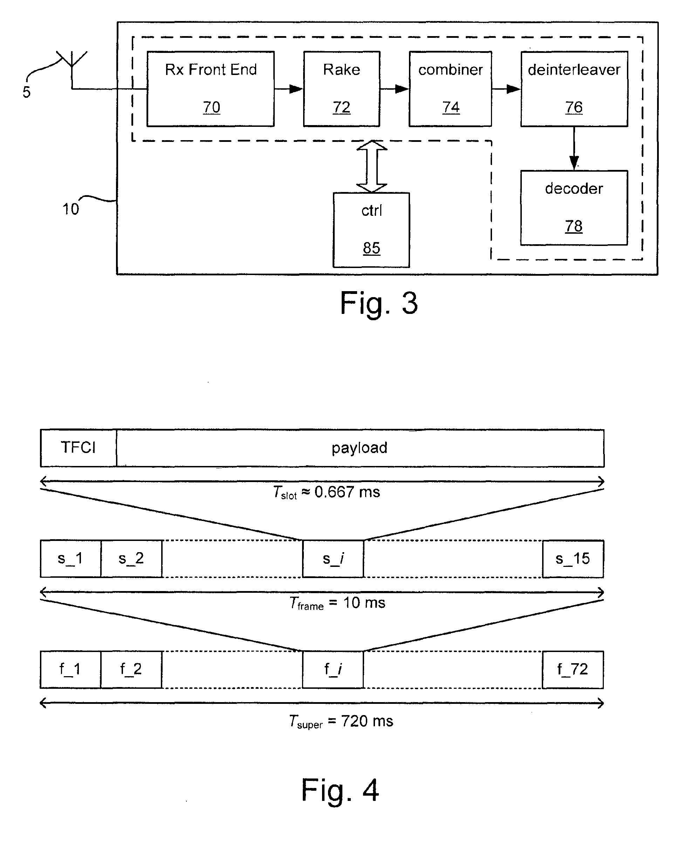

Fig. 3 is a block diagram of the radio receiver circuit 10 according to an embodiment of the present invention. According to the embodiment, the radio receiver circuit 10 comprises receiver front end unit 70, which is arranged to downconvert radiofrequency (RF) signals received e.g. from the BS 1 (Fig. 1). For this purpose, the receiver front end 70 may comprise one or more mixers (not shown), local oscillators (not shown), filters (not shown), etc, as is known in the art and therefore not further described in this specification. Furthermore, as illustrated in Fig. 3, the radio receiver circuit 10 may comprise a rake receiver unit 72, a combiner unit 74, a deinterleaver unit 76, and a decoder unit 78 for equalization, demodulation, and decoding of the received signals. Such units are known in the field of WCDMA receivers, and are therefore not further described in this specification. Furthermore, according to the embodiment illustrated in Fig. 3, the radio receiver circuit 10 comprises a control unit 85 arranged to control the operation of the radio receiver circuit for saving power, which described in more detail below in the context of specific embodiments.

Fig. 4 schematically illustrates transmission timing for a SCCPCH in a WCDMA communication system, when the SCCPCH is used for transmission of MBMS data. A so called super frame has a duration of $T_{super}$ = 720 ms. Each superframe is in turn divided into 72 frames f_1-f_72, each of which has a duration of $T_{flame}$ = 10 ms. Furthermore, each frame f_$i$ is in turn divided into 15 time slots s_1-s_15, each of which has a duration of $T_{slot}$ ≈ 0.667 ms. A number of neighboring frames are grouped together into so called transmission-time intervals (TTIs). In the case of MBMS, the number of frames in a TTI may e.g. be four or eight for transmission over the MBMS traffic channel (MTCH) or two for transmission over the MBMS control channel (MCCH) (the MTCH and the MCCH are mapped onto the SCCPCH). However, other numbers of frames may apply for other services transmitted over the SCCPCH. For example, for transmission over the common control channel (CCCH) and transmission over the common traffic channel (CTCH), the number of frames in a TTI is normally one (the CTCH and the CCCH are mapped onto the SCCPCH). It should be noted that the number of frames in a TTI specified in standard specifications may change over time. Data traffic transmitted over the CCCH and the CTCH are examples of applications, other than MBMS traffic, in which embodiments of the present invention are applicable.

A more general view, which is not limited to SCCPCH, is that a TTI comprises at least one time slot, as outlined above with reference to Fig. 1. As illustrated in Fig. 4 for the time slot s_$i$, a TFCI (or a portion thereof) is transmitted in the beginning of each time slot s_1-s_15. The TFCI is a bit sequence which identifies for the radio receiver circuit how the received signal in the transmission time interval is to be deinterleaved and decoded for recovering the data. The TFCI is selected from a finite predefined set of possible TFCIs. As indicated in Fig. 3, payload data is also transmitted in the slot s_$i$ after the TFCI. There may be some types of data traffic, for which the whole TFCI is transmitted in a single time slot. For other types of data traffic, the TFCI is distributed over a number of consecutive time slots. That is, the TFCI is divided into a number of shorter control sequences, each of which is transmitted during one of the consecutive time slots. Furthermore, the TFCI is normally repeated as many times as possible throughout the TTI. For example, if the whole TFCI is transmitted in a single time slot, the TFCI is normally repeated in each time slot of the TTI. As another example, if the TFCI is distributed over five time slots (i.e. divided into three shorter control sequences that each can be transmitted in the TFCI portion of a single time slot), the TFCI is normally repeated three times in each frame of the TTI.

A number of different services have been defined for MBMS. One of the most dominant ones is mobile TV. In this case one TV channel is mapped to a radio bearer of certain bit rate. The radio bearer can be configured for a limited number of bit rates, whereas the actual TV channel will have a varying bit rate that is determined by the content type and the codec used. The consequence of this is that the full bit rate of the radio bearer is not needed and the BS 1 utilizes this by simply turning off the radio bearer at regular intervals to save resources in the network. This means that, for a large portion of the total time, no data is transmitted by the BS 1 for this radio bearer. This interrupt in transmission is normally not signaled to the MT 2. For conventional MTs, the MT 2 will always try to decode the transmission with the result of cyclic redundancy check (CRC) mismatch during the times that the BS 2 is not transmitting anything. Typically, the bit rate configurations for MBMS traffic can be 64 Kbit/s, 128 Kbit/s or 256 Kbit/s (though it should be noted that data rates specified in a standard specification may change over time). An example with bursty transmission is a movie coded such that it requires a data channel with a bit rate of at least 160 Kbit/s. In this case the communication channel 3 will have a bit rate of 256 Kbit/s and only during 62.5% of the transmission time will the MT 2 receive actual data. A continuous reception of MBMS channels makes it necessary to keep the units 70-78 of the radio receiver circuit 10 (Fig. 3) running continuously, thereby consuming power.

According to embodiments of the present invention, it has been realized that the TFCI (or similar control sequence) may be utilized for deciding when parts of the radio receiver circuit 10 can be disabled for saving power. Disabling a part of the radio receiver may e.g. mean turning off or reducing a supply voltage of a part, turning off a clock signal of the part, and/or a combination thereof. Data transmitted during bursty MBMS transmission over SCCPCH in WCDMA is transmitted in a time interval which spans one or more whole adjacent TTIs. If transmission of data is discontinued, because the available bit rate of the SCCPCH exceeds the required bit rate for the transmitted data as outlined above, the transmission is discontinued for one or more whole adjacent TTIs. In other words, a transmission burst always starts at the beginning of a TTI and spans one or more of whole TTIs. When data is transmitted, the received TFCI of each TTI corresponds to one of the TFCIs of the predefined set, which one can be determined by means of determining correlation values between the received TFCI and the TFCIs in the predefined set. The correlation value corresponding to the correct TFCI is normally significantly higher than the other correlation values, whereby the correct TFCI can be determined. When the transmission is discontinued, the situation is different. Then, the received TFCI will be based on noise and distortion (since no TFCI is actually transmitted by the BS 1). Therefore, the received TFCI will not correspond to any of the TFCIs of the predefined set, which will be manifested in that none of the correlation values will be significantly larger than all the other. This allows for detection of whether any data is transmitted in a TTI.

According to embodiments of the present invention, a method of controlling the radio receiver circuit 10 is provided. The method may e.g. be performed by the control unit 85 in the embodiment of the radio receiver circuit 10 illustrated in Fig. 3. According to the method, correlation values are determined between a received control sequence of a time slot of a TTI (or one or more time slots, e.g. in the case of a TFCI that is distributed over several time slots as described above) and each of the control sequences of the predefined set. Based on said correlation values, it is determined whether any data is transmitted in the TTI. In response to determining that no data is transmitted in the TTI, at least part of the radio receiver circuit 10 is disabled during at least part of the remainder of the TTI. Thereby, power can be saved compared with having said part enabled.

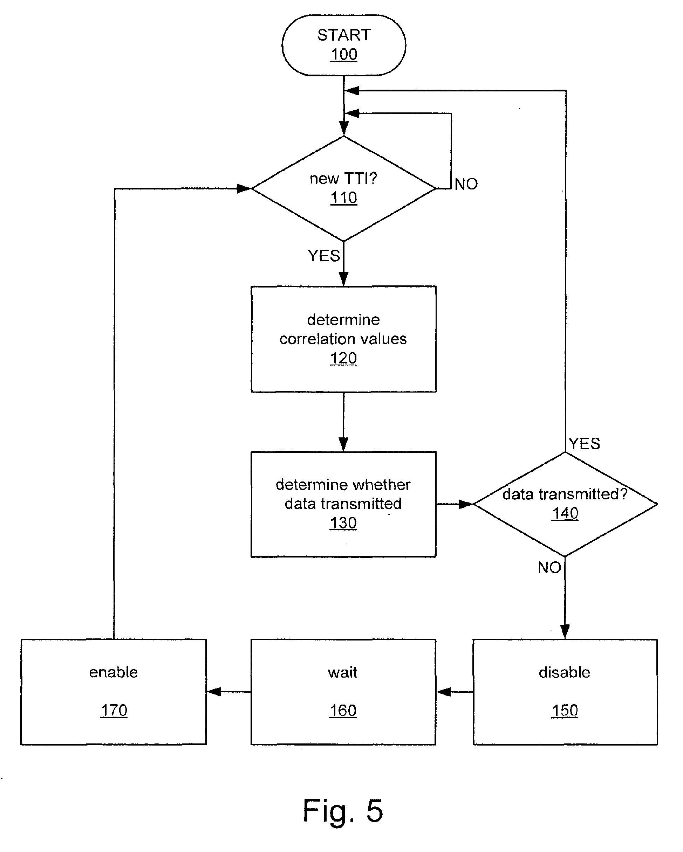

Fig. 5 is a flow chart for an embodiment of the method, targeting the case of MBMS transmission over a SCCPCH in WCDMA. The method is started in step 100. In step 110, the beginning of a new TTI is awaited. For example, the timing of frames and TTIs may be communicated between the BS 1 and the MT 2 in a synchronization between the BS 1 and the MT 2, such that the MT 2 is aware of when each frame starts. Hence, determination of whether the beginning of a new TTI has been reached in step 110 may comprise comparing an internal time reference of the MT 2 with known start times for TTIs.

When it has been determined that the beginning of a new TTI has been reached, the correlation values between the received TFCI in the first time slot of the TTI (or a plurality of the time slots in the beginning of the TTI if the TFCI is distributed over several time slots as described above) and each of the TFCIs in the predefined set of TFCIs are determined in step 120. The correlation value between the received TFCI and a TFCI in the predefined set may be determined according to

$$C_i = \sum_n R[n] TFCI_i[n]$$

where $TFCI_i[n]$ is the TFCI in the predetermined set, $i$ is an index indentifying the particular TFCI in the predetermined set, $R[n]$ is the received TFCI, $n$ is a sequence index, and $C_i$ is the resulting correlation value. The summation is performed over all samples of the received TFCI. The samples of the received TFCI may be represented with so called soft bits, which can adopt not only values representing logic '0' and logic '1', but also values in between. The use of soft data bits, e.g. for representation of data of received signals during decoding, is known. Therefore, the concept of soft bits is not further described herein.

In step 130, it is determined, based on said correlation values, whether any data is transmitted in the TTI. If it is determined that no data is transmitted in the TTI, then the method proceeds via step 140 to step 150.

In step 150, at least part of the radio receiver circuit 10, such as one or more of the blocks 70-78 in the embodiment illustrated in Fig. 3, are disabled. In step 160, the method is halted for a wait period. Determination of a suitable length of the wait period is further described below in the context of specific embodiments. In step 170, the part of the radio receiver circuit 10 that was disabled in step 150 is enabled again. On the other hand, if it is determined in step 130 that data is transmitted in the TTI, then the method returns via step 140 to step 110.

In the case of MBMS services transmitted over a SCCPCH in WCDMA, it is known that, data is transmitted either in all time slots of a TTI or in none of the time slots of the TTI as described above. Therefore, it is not necessary to check more time slots than the first time slot (or first few time slots in case of a distributed TFCI) of a TTI for presence of transmitted data in the TTI. Therefore, only the first time slot (or time slots in case of a distributed TFCI) is checked in the embodiment illustrated in Fig. 5. However, in other embodiments of the method, additionally or alternatively, one or more time slots of a TTI other than the first time slot(s) may be checked for the presence of transmitted data in the TTI without departing from the scope of the invention.

In some embodiments of the method, the length of the wait period of step 160 is selected such that the part of the radio receiver circuit 10 that is disabled in step 150 is enabled again slightly before the beginning of the next TTI, thereby enabling reception of data in the beginning of the next TTI, which is the earliest time point when transmission of data can be expected to be resumed. Hence, more generally, the method may comprise enabling said part of the radio receiver circuit before the following TTI.

In some embodiments, the length of the wait period may be determined based on history of the received data. For example, based on correlation values for a plurality of time slots, which in turn allows for determination of whether data was transmitted in the corresponding TTIs, statistical data of how long the periods with transmission and the periods without transmission (or "transmission gaps") have been in the past can be determined. Based on this statistical data, a prediction can be made regarding the length of a transmission gap. Hence, a subsequent TTI, for which transmission of data is expected to be resumed, can be predicted based on this information. The wait period to be used in step 160 for said subsequent transmission gap may e.g. be selected such that the part of the radio receiver circuit 10 that has been disabled in step 150 is enabled before the subsequent TTI, for which transmission of data is expected to be resumed, such that reception of data in the beginning of said subsequent TTI is enabled. More generally, the method comprises predicting, based on correlation values of a plurality of time slots, a subsequent TTI for which transmission of data is expected to be resumed. Furthermore, the method comprises enabling said part of the radio receiver circuit 10 before said subsequent TTI.

The length of the transmission gap may e.g. be predicted based on an average bit rate of the data transmitted over the communication channel 3 and a maximum bit rate of the communication channel 3. For example, consider a case where said average bit rate is 70 % of said maximum bit rate, i.e. the duty cycle of the transmitted data is 70 %. Then, if e.g. the length of a period with transmission has been 7 TTIs, the length of the following transmission gap may be expected to be 3 TTIs. Hence, transmission can be expected to be resumed in the fourth TTI following after said period with transmission. Hence, the disabled part of the radio receiver circuit 10 may be enabled slightly before said fourth TTI, such that reception of data in the beginning of said fourth TTI is enabled. Alternatively, as a safety margin to reduce the risk of missing reception of transmitted data, the disabled part of the radio receiver circuit 10 may be enabled earlier, e.g. slightly before the third TTI following after said period with transmission, such that reception of data in the beginning of said third TTI is enabled.

As indicated above, the method may comprise estimating, based on correlation values of a plurality of time slots, the average bit rate of the data transmitted over the communication channel 3. Furthermore, the method may comprise predicting the subsequent TTI, for which transmission of data is expected to be resumed, based on said average bit rate and the maximum bit rate of the communication channel 3.

In some embodiments, dedicated training periods are used, when the above mentioned statistical data for predicting the lengths of subsequent transmission gaps are gathered. Such training periods may be repeated regularly. Additionally or alternatively, such training periods may be repeated as necessary, e.g. when it is determined that the accuracy of the predicted lengths of transmission gaps is insufficient. For example, if the predicted length of a transmission gap is too long compared with the actual length of the transmission gap, there is a risk of missing reception of transmitted data. On the other hand, if the predicted length of the transmission gap is too short compared with the actual length of the transmission gap, the disabled part of the radio receiver circuit 10 may be enabled unnecessarily early, whereby the resulting power saving is not as efficient as it could have been. What is considered as "too long" and "too short" may differ from application to application, and may e.g. be determined based on computer simulations and/or measurements in conjunction with system requirements of a given application.

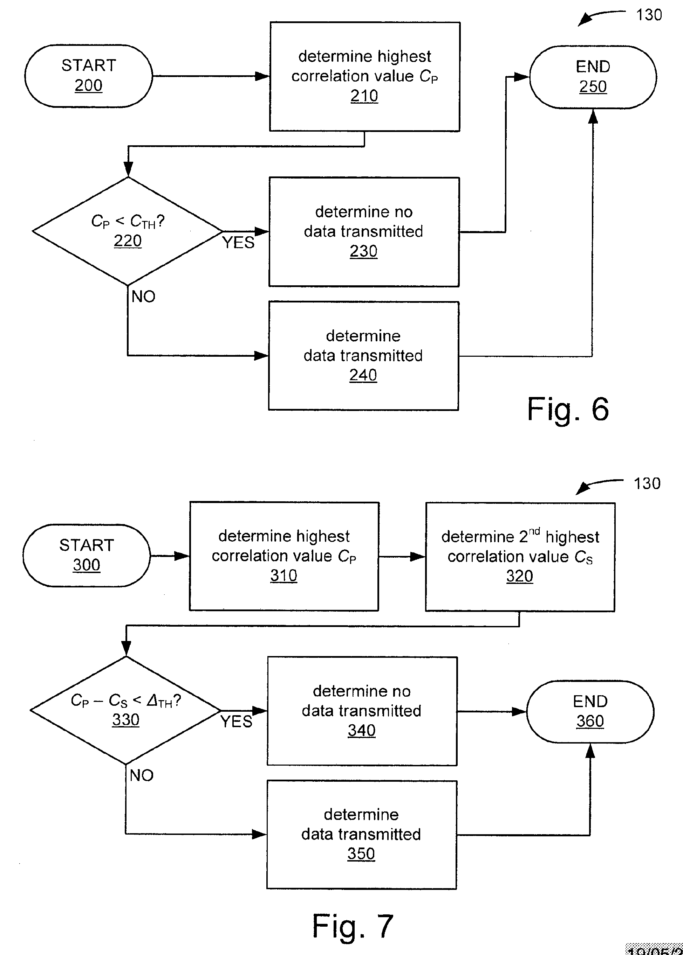

Fig. 6 is a flow chart for step 130 (Fig. 5) according to an embodiment of the present invention, illustrating how it may be determined, based on the correlation values determined in step 120 (Fig. 5), whether any data is transmitted in the TTI. The operation of step 130 is started in step 200. In step 210, it is determined which one of the correlation values that is the largest, in the following referred to as the primary correlation value $C_P$ .

In step 220, $C_P$ is compared with a threshold value $C_{TH}$. If $C_P < C_{TH}$ (or in alternative embodiments, if $C_P \le C_{TH}$), the operation proceeds to step 230. Otherwise, the operation proceeds to step 240. In step 230, it is determined that no data is transmitted in the TTI, and the operation proceeds to step 250. In contrast thereto, in step 240, it is determined that data is transmitted in the TTI, and the operation proceeds to step 250. In step 250, step 130 is ended.

More generally, according to embodiments of the invention, determining whether any data is transmitted in the TTI may comprise comparing the highest one of the correlation values with a threshold value. Moreover, determining whether any data is transmitted in the TTI may comprise, if the highest one of said correlation values falls below the threshold value, determining that no data is transmitted in the TTI. As indicated above, in some embodiments, determining whether any data is transmitted in the TTI may additionally comprise, if the highest one of said correlation values equals the threshold value, determining that no data is transmitted in the TTI.

Fig. 7 is a flow chart for step 130 (Fig. 5) according to another embodiment of the present invention, also illustrating how it may be determined, based on the correlation values determined in step 120 (Fig. 5), whether any data is transmitted in the TTI. Steps 300 and 310 correspond to steps 200 and 210 (Fig. 6), respectively, and are not further described. In step 320, it is determined which one of the correlation values that is the second largest, in the following referred to as the secondary correlation value $C_S$ . In step 330, the difference $C_P - C_S$ is compared with a threshold value $\Delta_{TH}$. If $C_P - C_S < \Delta_{TH}$ (or in alternative embodiments, if $C_P - C_S \le \Delta_{TH}$), the operation proceeds to step 340. Otherwise, the operation proceeds to step 350. In step 340, it is determined that no data is transmitted in the TTI, and the operation proceeds to step 360. In contrast thereto, in step 350, it is determined that data is transmitted in the TTI, and the operation proceeds to step 360. In step 360, step 130 is ended.

More generally, according to embodiments of the invention, determining whether any data is transmitted in the TTI may comprise comparing a difference between the highest one and the second highest one of the correlation values with a threshold value. Furthermore, determining whether any data is transmitted in the TTI may comprise, if said difference falls below the threshold value, determining that no data is transmitted in the TTI. As indicated above, in some embodiments, determining whether any data is transmitted in the TTI may additionally comprise, if said difference equals the threshold value, determining that no data is transmitted in the TTI.

The threshold values $C_{TH}$ and $\Delta_{TH}$ may be selected such that the risk for making an erroneous determination as to whether any data is transmitted in the TTI or not is below an acceptable level. For example, if the threshold value is chosen too small, the risk of erroneously determining that data is transmitted in the TTI (when in fact it is not) may be too large. Similarly, if the threshold value is chosen too large, the risk of erroneously determining that no data is transmitted in the TTI (when in fact it is) may be too large. Said acceptable level may be different from application to application. Suitable threshold values for different situations may e.g. be determined based on computer simulations and/or measurements for a given application. Furthermore, the threshold value may be dynamically changed during operation, e.g. based on varying conditions of the communication channel 3, such as based on a signal-to-interference ratio (SIR) of the communication channel 3.

According to some embodiments of the present invention the control unit 85 of the radio receiver circuit 10 (Fig. 3) is adapted to perform the method described above with reference to various embodiments.

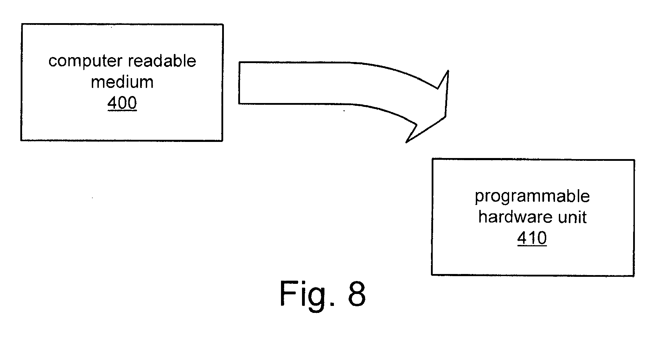

The control unit 85 (Fig. 3) may be implemented as an application-specific hardware unit, such as an application-specific integrated circuit (ASIC). Alternatively, the control unit 85, or parts thereof, may be implemented using one or more configurable or programmable hardware units, such as but not limited to one or more field-programmable gate arrays (FPGAs), processors, or microcontrollers. For example, the functionality of the control unit 85 may be implemented in the CPU 20 (Fig. 2). Hence, embodiments of the present invention may be embedded in a computer program product, which enables implementation of the method and functions described herein, e.g. the embodiments of the method described above with reference to Figs. 5-7. Therefore, according to embodiments of the present invention, there is provided a computer program product, comprising instructions arranged to cause a programmable hardware unit with processing capabilities, such as the aforementioned one or more processors or micro controllers, to perform the steps of any of the embodiments of the method described above with reference to Figs. 5-7. The computer program product may comprise program code which is stored on a computer readable medium 400, as illustrated in Fig. 8, which can be loaded and executed by a programmable hardware unit 410 having processing capabilities, to cause it to perform the steps of any of the embodiments of the method described above with reference to Figs. 5-7.

According to embodiments of the present invention, the radio receiver circuit 20 is comprised in an electronic apparatus, such as the MT 2 (Fig. 2). Such an electronic apparatus may e.g. be, but is not limited to, a mobile telephone, a smartphone, a portable digital assistant, a computer, or a data modem, such as a PC card data modem.

The present invention has been described above with reference to specific embodiments. However, other embodiments than the above described are possible within the scope of the invention. Different method steps than those described above, performing the method by hardware or software, may be provided within the scope of the invention. The different features and steps of the embodiments may be combined in other combinations than those described. The scope of the invention is only limited by the appended patent claims.

## Claims

1. A method for controlling a radio receiver circuit (10) adapted to receive data over a communication channel (3), over which data is transmitted in transmission time intervals, each of which comprises at least one time slot (s_1-s_15), wherein data transmitted in one or more such time slots of such a transmission-time interval comprises a control sequence (TFCI) selected from a finite predefined set of control sequences, comprising:

   determining correlation values between a received control sequence of said one or more time slots (s_i) of a transmission time interval and each of the control sequences of the predefined set;
   determining, based on said correlation values, whether any data is transmitted in the transmission time interval;
   in response to determining that no data is transmitted in the transmission time interval, disabling at least part of the radio receiver circuit (10) during at least part of the remainder of the transmission time interval for saving power; wherein the method is **characterised by**:

   predicting, based on correlation values of a plurality of time slots, a subsequent transmission time interval for which transmission of data is expected to be resumed; and
   enabling said part of the radio receiver circuit (10) before said subsequent transmission time interval.

2. The method according to claim 1, wherein determining whether any data is transmitted in the transmission time interval comprises:

   comparing the highest one of said correlation values with a threshold value; and
   if the highest one of said correlation values falls below the threshold value, determining that no data was transmitted in the transmission time interval.

3. The method according to claim 1, wherein determining whether any data is transmitted in the transmission time interval comprises:

   comparing a difference between the highest one and the second highest one of said correlation values with a threshold value; and
if said difference falls below the threshold value, determining that no data was transmitted in the transmission time interval.

4. The method according to claim 1, wherein predicting said subsequent transmission time interval comprises:

estimating, based on said correlation values of said plurality of time slots, an average bit rate of the data transmitted over the communication channel (3); and
predicting said subsequent transmission time interval based on said average bit rate and a maximum bit rate of the communication channel (3).

5. The method according to any of the claims 1 - 3, comprising:

enabling said part of the radio receiver circuit before the following transmission time interval.

6. The method according to any preceding claim, wherein the data transmitted over the communication channel (3) is multimedia broadcast multicast service, MBMS, data.

7. The method according to any preceding claim, wherein the communication channel (3) is a communication channel of a wideband code-division multiple-access, WCDMA, communication system.

8. The method according to claim 7, wherein the communication channel (3) is a secondary common control physical channel, SCCPCH.

9. The method according to claim 8, wherein the control sequence (TFCI) is a transport format combination indicator, TFCI.

10. A computer program product comprising computer program code means for executing the method according to any of the preceding claims when said computer program code means are run by a programmable hardware unit (410).

11. A control unit (85) for a radio receiver circuit (10) adapted to receive data over a communication channel (3), over which data is transmitted in transmission time intervals, each of which comprises at least one time slot (s_1-s_15), wherein data transmitted in one or more such time slots of such a transmission time interval comprises a control sequence (TFCI) selected from a finite predefined set of control sequences, wherein the control unit (85) comprises:

means for determining correlation values between a received control sequence of said one or more time slots (s_i) of a transmission time interval and each of the control sequences of the predefined set;
means for determining, based on said correlation values, whether any data is transmitted in the transmission time interval;
means for disabling, in response to determining that no data is transmitted in the transmission time interval, at least part of the radio receiver circuit (10) during at least part of the remainder of the transmission time interval for saving power;
the control unit being **characterised by**:

means for predicting, based on correlation values of a plurality of time slots, a subsequent transmission time interval for which transmission of data is expected to be resumed; and
means for enabling said part of the radio receiver circuit (10) before said subsequent transmission time interval.

12. A radio receiver circuit (10) adapted to receive data over a communication channel (3), over which data is transmitted in transmission time intervals, each of which comprises at least one time slot (s_1-s_15), wherein data transmitted in one or more such time slots of such a transmission time interval comprises a control sequence (TFCI) selected from a finite predefined set of control sequences, comprising:

a control unit according to claim 11.

13. An electronic apparatus (2) comprising the radio receiver circuit (10) according to claim 12.

**Patentansprüche**

1. Verfahren zur Steuerung einer Funkempfängerschaltung (10), die zum Empfangen von Daten über einen Kommunikationskanal (3) ausgelegt ist, über welchen Daten in Sendezeitintervallen gesendet werden, welche jeweils mindestens einen Zeitschlitz (s_1-s_15) umfassen, wobei Daten, die in einem oder mehreren solchen Zeitschlitzen von solchen Sendezeitintervallen gesendet werden, eine Befehlsfolge (TFCI) umfassen, die aus einem begrenzten vordefinierten Satz von Befehlsfolgen ausgewählt ist, umfassend:

Bestimmen von Korrelationswerten zwischen einer empfangenen Befehlsfolge des einen oder der mehreren Zeitschlitze (s_i) eines Sendezeitintervalls und jeder der Befehlsfolgen des vordefinierten Satzes;

Bestimmen basierend auf den Korrelationswerten, ob Daten im Sendezeitintervall gesendet werden;
Deaktivieren als Reaktion auf ein Bestimmen, dass keine Daten im Sendezeitintervall gesendet werden, mindestens eines Teils der Funkempfängerschaltung (10) während mindestens eines Teils des restlichen Sendezeitintervalls zum Sparen von Energie; wobei das Verfahren **gekennzeichnet ist durch**:

Vorhersagen basierend auf Korrelationswerten einer Mehrzahl von Zeitschlitzen eines nachfolgenden Sendezeitintervalls, für welches eine Wiederaufnahme des Sendens von Daten erwartet wird; und
Aktivieren des Teils der Funkempfängerschaltung (10) vor dem nachfolgenden Sendezeitintervall.

2. Verfahren nach Anspruch 1, wobei das Bestimmen, ob Daten im Sendezeitintervall gesendet werden, umfasst:

Vergleichen des höchsten der Korrelationswerte mit einem Schwellenwert; und
Bestimmen, dass im Sendezeitintervall keine Daten gesendet wurden, wenn der höchste der Korrelationswerte unter den Schwellenwert fällt.

3. Verfahren nach Anspruch 1, wobei das Bestimmen, ob Daten im Sendezeitintervall gesendet werden, umfasst:

Vergleichen einer Differenz zwischen dem höchsten und dem zweithöchsten der Korrelationswerte mit einem Schwellenwert; und
Bestimmen, dass im Sendezeitintervall keine Daten gesendet wurden, wenn die Differenz unter den Schwellenwert fällt.

4. Verfahren nach Anspruch 1, wobei das Vorhersagen des nachfolgenden Sendezeitintervalls umfasst:

Schätzen basierend auf den Korrelationswerten der Mehrzahl von Zeitschlitzen einer mittleren Bitrate der Daten, die über den Kommunikationskanal (3) gesendet werden; und
Vorhersagen des nachfolgenden Sendezeitintervalls basierend auf der mittleren Bitrate und einer maximalen Bitrate des Kommunikationskanals (3).

5. Verfahren nach einem der Ansprüche 1 bis 3, umfassend:

Aktivieren des Teils der Funkempfängerschaltung vor dem folgenden Sendezeitintervall.

6. Verfahren nach einem der vorhergehenden Ansprüche, wobei die Daten, die über den Kommunikationskanal (3) gesendet werden, Daten eines Multimedia-Broadcast-Multicast-Dienstes, MBMS, sind.

7. Verfahren nach einem der vorhergehenden Ansprüche, wobei der Kommunikationskanal (3) ein Kommunikationskanal eines Kommunikationssystems mit Breitband-Codemultiplexzugriff, WCDMA, ist.

8. Verfahren nach Anspruch 7, wobei der Kommunikationskanal (3) ein sekundärer gemeinsamer physikalischer Steuerkanal, SCCPCH, ist.

9. Verfahren nach Anspruch 8, wobei es sich bei der Befehlsfolge (TFCI) um einen Transportformatkombinationsindikator, TFCI, handelt.

10. Computerprogrammprodukt, umfassend Computerprogrammcodemittel zum Ausführen des Verfahrens nach einem der vorhergehenden Ansprüche, wenn die Computerprogrammcodemittel durch eine programmierbare Hardwareeinheit (410) ausgeführt werden.

11. Steuereinheit (85) für eine Funkempfängerschaltung (10), die zum Empfangen von Daten über einen Kommunikationskanal (3) ausgelegt ist, über welchen Daten in Sendezeitintervallen gesendet werden, welche jeweils mindestens einen Zeitschlitz (s_1-s_15) umfassen, wobei Daten, die in einem oder mehreren solchen Zeitschlitzen von solchen Sendezeitintervallen gesendet werden, eine Befehlsfolge (TFCI) umfassen, die aus einem begrenzten vordefinierten Satz von Befehlsfolgen ausgewählt ist, wobei die Steuereinheit (85) umfasst:

Mittel zum Bestimmen von Korrelationswerten zwischen einer empfangenen Befehlsfolge des einen oder der mehreren Zeitschlitze (s_i) eines Sendezeitintervalls und jeder der Befehlsfolgen des vordefinierten Satzes;
Mittel zum Bestimmen basierend auf den Korrelationswerten, ob Daten im Sendezeitintervall gesendet werden;
Mittel zum Deaktivieren als Reaktion auf ein Bestimmen, dass keine Daten im Sendezeitintervall gesendet werden, mindestens eines Teils der Funkempfängerschaltung (10) während mindestens eines Teils des restlichen Sendezeitintervalls zum Sparen von Energie; wobei die Steuereinheit **gekennzeichnet ist durch**:

Mittel zum Vorhersagen basierend auf Korrelationswerten einer Mehrzahl von Zeitschlitzen eines nachfolgenden Sendezeitintervalls, für welches eine Wiederaufnahme des Sendens von Daten erwartet wird; und

Mittel zum Aktivieren des Teils der Funkempfängerschaltung (10) vor dem nachfolgenden Sendezeitintervall.

12. Funkempfängerschaltung (10), die zum Empfangen von Daten über einen Kommunikationskanal (3) ausgelegt ist, über welchen Daten in Sendezeitintervallen gesendet werden, welche jeweils mindestens einen Zeitschlitz (s_1-s_15) umfassen, wobei Daten, die in einem oder mehreren solchen Zeitschlitzen von solchen Sendezeitintervallen gesendet werden, eine Befehlsfolge (TFCI) umfassen, die aus einem begrenzten vordefinierten Satz von Befehlsfolgen ausgewählt ist, umfassend:

eine Steuereinheit nach Anspruch 11.

13. Elektronische Vorrichtung (2), umfassend die Funkempfängerschaltung (10) nach Anspruch 12.

## Revendications

1. Procédé de commande d'un circuit de récepteur radio (10) adapté pour recevoir des données via un canal de communication (3), via lequel des données sont transmises dans des intervalles de temps de transmission, dont chacun comprend au moins un intervalle de temps (s_1,s_15), dans lequel les données transmises dans un ou plusieurs de tels intervalles de temps d'un tel intervalle de temps de transmission comprennent une séquence de commande (TFCI) sélectionnée parmi un ensemble prédéfini fini de séquences de commande, comprenant de :

déterminer des valeurs de corrélation entre une séquence de commande reçue desdits un ou plusieurs intervalles de temps (s_i) d'un intervalle de temps de transmission et chacune des séquences de commande de l'ensemble prédéfini ;
déterminer, sur la base desdites valeurs de corrélation, si de quelconques données sont transmises dans l'intervalle de temps de transmission ;
en réponse à la détermination qu'aucune donnée n'est transmise dans l'intervalle de temps de transmission, désactiver au moins une partie du circuit de récepteur radio (10) pendant au moins une partie du restant de l'intervalle de temps de transmission pour économiser de l'énergie ; dans lequel le procédé est **caractérisé par** :

la prédiction, sur la base des valeurs de corrélation d'une pluralité d'intervalles de temps, d'un intervalle de temps de transmission subséquent pour lequel une transmission de données est escomptée recommencer ; et
activer ladite partie du circuit de récepteur radio (10) avant ledit intervalle de temps de transmission subséquent.

2. Procédé selon la revendication 1, dans lequel déterminer si de quelconques données sont transmises dans l'intervalle de temps de transmission comprend de :

comparer la valeur la plus haute desdites valeurs de corrélation avec une valeur seuil ; et
si la valeur la plus haute desdites valeurs de corrélation baisse au-dessous de la valeur seuil, déterminer qu'aucune donnée n'a été transmise dans l'intervalle de temps de transmission.

3. Procédé selon la revendication 1, dans lequel déterminer si une quelconque donnée est transmise dans l'intervalle de temps de transmission comprend de :

comparer une différence entre la valeur la plus haute et la seconde valeur la plus haute desdites valeurs de corrélation avec une valeur seuil ; et
si ladite différence baisse au-dessous de la valeur seuil, déterminer qu'aucune donnée n'a été transmise dans l'intervalle de temps de transmission.

4. Procédé selon la revendication 1, dans lequel prédire ledit intervalle de temps de transmission subséquent comprend de :

estimer, sur la base desdites valeurs de corrélation de ladite pluralité d'intervalles de temps, un débit moyen de données transmises via le canal de communication (3) ; et
prédire ledit intervalle de temps de transmission subséquent sur ledit débit moyen et un débit maximal du canal de communication (3).

5. Procédé selon une quelconque des revendications 1-3, comprenant de :

activer ladite partie du circuit de récepteur radio avant l'intervalle de temps de transmission suivant.

6. Procédé selon une quelconque des revendications précédentes, dans lequel les données transmises via le canal de communication (3) sont des données de service de multidiffusion diffusion multimédia, MBMS.

7. Procédé selon une quelconque des revendications précédentes, dans lequel le canal de communication (3) est un canal de communication d'un système de communication à accès multiple par répartition de code large bande, WCDMA.

8. Procédé selon la revendication 7, dans lequel le canal de communication (3) est un canal physique de commande commun secondaire, SCCPCH.

9. Procédé selon la revendication 8, dans lequel la séquence de commande (TFCI) est un indicateur de combinaison de format de transport, TFCI.

10. Produit de programme informatique comprenant des moyens de code de programme informatique pour exécuter le procédé selon une quelconque des revendications précédentes quand lesdits moyens de code de programme informatique sont exécutés par une unité matérielle programmable (410).

11. Unité de commande (85) pour circuit de récepteur radio (10) adapté afin de recevoir des données via un canal de communication (3), via lequel des données sont transmises dans des intervalles de temps de transmission, dont chacun comprend au moins comprend au moins un intervalle de temps (s_1, s_15), dans lequel les données transmises dans un ou plusieurs de tels intervalles de temps d'un tel intervalle de temps de transmission comprennent une séquence de commande (TFCI) sélectionnée parmi un ensemble prédéfini fini de séquences de commande, dans lequel l'unité de commande (85) comprend :

un moyen pour déterminer des valeurs de corrélation entre une séquence de commande reçue desdits un ou plusieurs intervalles de temps (s_i) d'un intervalle de temps de transmission et chacune des séquences de commande de l'ensemble prédéfini ;
un moyen pour déterminer, sur la base desdites valeurs de corrélation, si de quelconques données sont transmises dans l'intervalle de temps de transmission ;
un moyen pour désactiver, en réponse à la détermination qu'aucune donnée n'est transmise dans l'intervalle de temps de transmission, au moins une partie du circuit de récepteur radio (10) pendant au moins une partie du restant de l'intervalle de temps de transmission pour économiser de l'énergie ;l'unité de commande étant **caractérisée par** :

un moyen pour prédire, sur la base des valeurs de corrélation d'une pluralité d'intervalles de temps, d'un intervalle de temps de transmission subséquent pour lequel une transmission de données est escomptée recommencer ; et
un moyen pour activer ladite partie du circuit de récepteur radio (10) avant ledit intervalle de temps de transmission subséquent.

12. Circuit de récepteur radio (10) adapté pour recevoir des données via un canal de communication (3), via lequel des données sont transmises dans des intervalles de temps de transmission, dont chacun comprend au moins un intervalle de temps (s_1, s_15), dans lequel les données transmises dans un ou plusieurs de tels intervalles de temps d'un tel intervalle de temps de transmission comprennent une séquence de commande (TFCI) sélectionnée parmi un ensemble prédéfini fini de séquences de commande, comprenant :

une unité de commande selon la revendication 11.

13. Dispositif électronique (2) comprenant le circuit de récepteur radio (10) selon la revendication 12.

Fig. 1

Fig. 2

Fig. 3

Fig. 4

Fig. 5

130

```
┌─────────┐      ┌──────────────────┐                    ┌─────────┐
│ START   │─────▶│ determine highest│                    │  END    │
│  200    │      │ correlation value│           ┌───────▶│  250    │
└─────────┘      │      C_P         │           │        └─────────┘
                 │      210         │           │             ▲
                 └──────────────────┘           │             │
                         │                       │             │
                         ▼                       │             │
                    ╱─────────╲    ┌──────────────────┐        │
                   ╱ C_P < C_TH?╲  │ determine no     │        │
                  ╱    220       ╲─│ data transmitted │────────┘
                  ╲              ╱ YES│      230       │
                   ╲           ╱   └──────────────────┘
                    ╲─────────╱
                      │ NO
                      │        ┌──────────────────┐
                      │        │ determine        │
                      └───────▶│ data transmitted │──────┘
                               │      240         │
                               └──────────────────┘
```

$C_P < C_{TH}$? 220

**Fig. 6**

130

```
┌─────────┐   ┌──────────────────┐   ┌──────────────────┐
│ START   │──▶│ determine highest│──▶│ determine 2^nd   │
│  300    │   │ correlation value│   │ highest          │
└─────────┘   │      C_P         │   │ correlation value│
              │      310         │   │      C_S         │
              └──────────────────┘   │      320         │
                                     └──────────────────┘
                      │
                      ▼
                 ╱─────────╲    ┌──────────────────┐   ┌─────────┐
                ╱C_P - C_S < ╲  │ determine no     │   │  END    │
               ╱  Δ_TH?      ╲──│ data transmitted │──▶│  360    │
               ╲    330      ╱YES│      340         │   └─────────┘
                ╲          ╱   └──────────────────┘       ▲
                 ╲────────╱                               │
                    │ NO       ┌──────────────────┐       │
                    │          │ determine        │       │
                    └─────────▶│ data transmitted │───────┘
                               │      350         │
                               └──────────────────┘
```

$C_P - C_S < \Delta_{TH}$? 330

**Fig. 7**

computer readable
medium
400

programmable
hardware unit
410

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03034600 A